# FASCICULE DE BREVET EUROPEEN

(11) **EP 4 187 695 B1**
(45) Date de publication et mention de la délivrance du brevet: **15.04.2026**
(21) Numéro de dépôt: 22209202.5
(22) Date de dépôt: 23.11.2022
(51) Int. Cl.: H01M 50/202, H01M 50/211, H01M 50/233, H01M 50/244, H01M 50/291, H01M 50/503, H01M 50/505, H01M 50/514, H01M 50/557

(54) **MODULE DE BATTERIE À EMPILEMENT D'ACCUMULATEURS À EMBALLAGE SOUPLE LOGÉS DANS DES SUPPORTS EMPILÉS ET FIXÉS ENTRE EUX, COMPRENANT DES BUSBARS LIÉS PAR COMPLÉMENTARITÉS DE FORMES AVEC DES COSSES RELIÉS AUX BORNES DES ACCUMULATEURS**
BATTERIEMODUL MIT IN GESTAPELTEN TRÄGERN ÜBEREINANDER ANGEORDNETEN UND MITEINANDER VERBUNDENEN STROMSCHIENEN MIT AN DEN ANSCHLUSS ANGESCHLOSSENEN BATTERIEANSCHLÜSSEN ANGEORDNETEN STAPELPAKETEN.
BATTERY MODULE WITH FLEXIBLE-PACKAGED BATTERIES ACCOMMODATED IN STACKED AND FIXED SUPPORTS.

(30) Priorité: 26.11.2021 FR 2112609
(43) Date de publication de la demande: 31.05.2023
(73) Titulaire: Commissariat à l'Energie Atomique et aux Energies Alternatives, 75015 Paris (FR)
(72) Inventeur: JOST, Pierre, 38054 Grenoble Cedex 09 (FR); DEWULF, Frédéric, 38054 Grenoble Cedex (FR)
(74) Mandataire: Ipsilon

(56) Documents cités:
- EP-A1- 3 550 635
- CN-A- 105 514 330
- CN-B- 105 226 320
- FR-A1- 2 973 948
- US-A1- 2016 164 051

## Description

### Domaine technique

La présente invention concerne le domaine des accumulateurs électrochimiques, et plus particulièrement à des accumulateurs métal-ion.

Plus particulièrement, l'invention a trait à un module de batterie, à empilement d'accumulateurs à emballage souple.

L'invention vise en premier lieu à améliorer les assemblages par empilement d'accumulateurs souples.

Bien que décrite en référence à un accumulateur Lithium-ion, l'invention s'applique à tout accumulateur électrochimique métal-ion, c'est-à-dire également Sodium-ion, Magnésiumion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide ou électrolyte dit solide.

Un module de batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

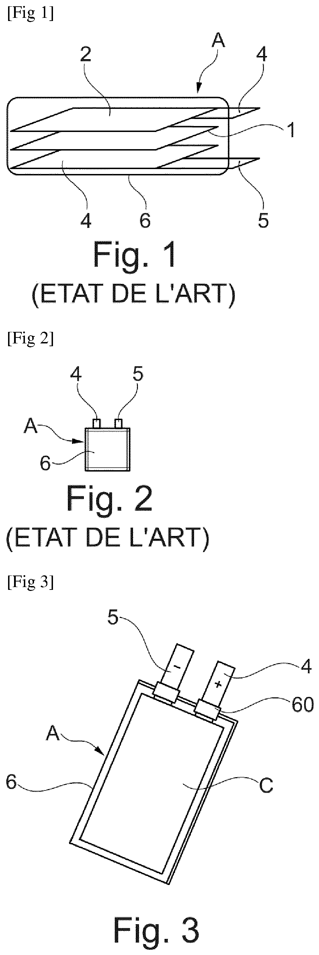

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCozO₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples, communément désignés sous la dénomination anglo-saxonne « Pouch », sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références N° ADR-0N25/AL40/CPP40 ou N°ADR-0N25/AL40/CPP80.

La figure 3 illustre ce type d'emballage souple 6 qui est agencé pour isoler et étanchéifier la cellule électrochimique C tout en étant traversé par une partie de deux lamelles ou languettes 4, 5, communément appelée en anglais « tab », formant les bornes ou pôles et qui s'étendent dans le plan de la cellule électrochimique. La languette 4, constituant la borne positive, se présente sous la forme d'un feuillard métallique d'épaisseur de 0,2 à 0,4 mm, le plus souvent en aluminium. La languette 5, constituant la borne négative, se présente sous la forme d'un feuillard métallique de 0,2 à 0,4 mm, le plus souvent en matériau nickel ou en cuivre ou en cuivre nickelé.

L'avantage principal des emballages souples est leur légèreté. Les accumulateurs Li-ion avec les plus grandes densités d'énergie comportent de ce fait un emballage souple.

Un accumulateur souple, communément appelé en anglais « *Thin Film Battery*», est le plus souvent constitué d'une seule cellule électrochimique.

L'épaisseur totale de l'accumulateur avec son emballage souple est généralement inférieure à 16 mm, qui est fonction des dimensions et de la chimie des matériaux d'électrodes, et ce sans altérer les performances lors du fonctionnement de l'accumulateur.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Dans le développement et la fabrication des batteries lithium-ion, chaque profil/nouvelle demande, quels que soient les acteurs du marché, nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Il est connu, notamment pour augmenter les densités d'énergie, de réaliser des pack-batterie par empilement d'accumulateurs à emballage souple, les bornes de sortie des électrodes (languettes ou « tabs ») étant reliées électriquement en série ou en parallèle les unes avec les autres.

Par ailleurs, les accumulateurs doivent parfois être mis en compression mécanique, afin de maximiser leur durée de vie.

En effet, il est également connu qu'une bonne maitrise d'une force de compression appliquée aux cellules électrochimiques apporte un gain en durée de vie des cellules et du pack-batterie afférent.

Il est également connu qu'il existe une force de compression optimale pour les cellules permettant de maximiser leur durée de vie. Si la force de compression est réduite de 50% par rapport à la force de compression optimale, on constate généralement une hausse du vieillissement de l'ordre également de 50%.

De fait, une compression appliquée sur la plus grande surface active d'une cellule électrochimique limite la délamination de ses couches internes (électrodes, séparateur, couches actives) et donc permet un gain significatif de performances en durée de vie et en fonctionnement nominal.

Selon la forme des accumulateurs, la compression à appliquer revêt plus ou moins d'importance. Dans le cas d'accumulateur à géométrie prismatique avec un emballage souple, il s'avère que la compression peut être primordiale.

Dans le cadre de l'invention, on entend par « accumulateur de géométrie prismatique », un accumulateur de forme globalement prismatique, c'est-à-dire de forme globalement parallélépipédique, aplati selon une dimension, indépendamment de son mode de réalisation qui pourra être par enroulement d'une cellule, par empilement (« stacking »), etc.

Usuellement, la compression est appliquée au moyen de tirants mécaniques qui sont agencés autour des différents accumulateurs empilés par groupe. Le couple de serrage appliqué aux tirants détermine la force de compression appliquée sur les cellules.

Un inconvénient majeur des tirants mécaniques est qu'il est très difficile de maîtriser la force de compression au cours du fonctionnement des accumulateurs du pack-batterie, ainsi qu'au cours de leur vieillissement. En effet, lors de la charge et de la décharge des accumulateurs, et lors de leur vieillissement, ceux-ci ont tendance à subir des variations de volume par gonflement/dégonflement des cellules.

Ce phénomène de gonflement des cellules s'accentue avec leur vieillissement, ce qui entraîne une forte hausse de la force de compression à appliquer. De fait, cela dégrade la durée de vie des cellules et induit un surdimensionnement mécanique et de matière active.

Ainsi, de manière générale, usuellement, pour compenser cette dégradation prévisible, les fabricants conçoivent un pack-batterie surdimensionné pour assurer une performance déterminée en fin de vie. Par exemple, pour une performance en fin de vie d'un pack à 10Ah, typiquement au bout de 10ans, les concepteurs dimensionnent initialement un pack-batterie de 12Ah. Autrement dit, ils prévoient une marge de l'ordre de 20% pour compenser le vieillissement des cellules.

Une autre difficulté inhérente à un assemblage par empilement d'accumulateurs souples est de pouvoir assurer des liaisons électriques fiables entre les bornes d'électrodes (languettes ou « tabs ») des différents accumulateurs empilés sans trop augmenter le poids, ni la complexité de l'assemblage en lui-même

Cette difficulté est d'autant plus accrue que les bornes se présentent sous la forme de languettes flexibles, d'un feuillard métallique de très faible épaisseur, typiquement de 0,2 à 0,4mm.

Généralement, les languettes d'électrode sont connectées les unes aux autres à l'aide de fils, de plaques ou de busbars par soudage. Pour cette raison, les languettes d'électrode sont partiellement pliées, et les plaques ou les busbars sont connectées aux parties pliées des autres languettes d'électrode par soudage, ce qui peut être complexe.

De plus, les pièces connectées peuvent se séparer les unes des autres en raison d'impacts externes, ce qui peut entraîner une augmentation du nombre de produits défectueux.

Enfin, cet assemblage par soudage supprime toute possibilité de remplacer un accumulateur défectueux par un autre au sein de l'empilement ou alors au prix d'un coût déraisonnable. Plusieurs solutions sont décrites dans la littérature pour réaliser des modules de batterie à empilement d'accumulateurs à emballage souple avec liaisons électriques entre leurs bornes ou pôles.

Le document US 2016/164051 A1 décrit un module de batterie comprenant une pluralité d'accumulateurs, en particulier de géométrie prismatique comprenant chacun au moins une cellule électrochimique C formée d'une cathode, d'une anode et d'un électrolyte intercalé entre la cathode et l'anode, et un emballage souple agencé pour contenir avec étanchéité la cellule électrochimique tout en étant traversé par une partie de deux languettes, formant les pôles ou bornes qui s'étendent dans le plan de la cellule électrochimique; une pluralité de cadres borgnes, allongés selon une direction longitudinale et latérale, chaque cadre borgne formant un support avec logement d'un de la pluralité d'accumulateurs, les supports étant empilés et fixés les uns sur les autres selon une direction d'empilement orthogonale aux directions longitudinale et latérale; une pluralité de paires de barrettes métalliques, chaque paire de barrettes étant insérée dans un logement ménagé dans un des bords latéraux et/ou longitudinaux d'un des supports pour former une paire de cosses, une portion de chaque cosse étant en contact avec pression contre un pôle ou borne d'un des accumulateurs; les portions des paires de cosses étant alignées selon deux rangées.

Le brevet US9023504B1 décrit un module de batterie avec des espaceurs agencés individuellement entre deux accumulateurs adjacents, chaque espaceur comprenant une partie de base en contact surfacique avec l'emballage souple d'un accumulateur, une partie d'aile faisant saillie de la partie de base venant recouvrir au moins partiellement les bords longitudinaux de deux accumulateurs adjacents et enfin une partie de fixation destinée à coupler mécaniquement l'espaceur à un espaceur adjacent. Un tel module présente de nombreux inconvénients. Tout d'abord, tel que dimensionné et agencé, chacun des espaceurs ne protège véritablement un accumulateur que sur une partie de son épaisseur. De plus, compte tenu de la forme de ces espaceurs, il n'y a pas de protection de la partie haute ni de la tranche en partie basse de l'accumulateur. Cela peut être très préjudiciable, sachant qu'en général, l'emballage souple d'un accumulateur est de faible épaisseur, le plus souvent inférieur à 0,2mm. D'autre part, ce brevet US9023504B1 ne prend pas en considération la liaison électrique à prévoir au niveau des languettes (bornes) de l'accumulateur. Ainsi, il n'y a ni mise en position, ni mise en pression des languettes pouvant permettre un mode de connexion électrique favorable des accumulateurs entre eux pour réaliser un assemblage en modules de batterie.

Le brevet EP1834365B1 divulgue un module de batterie à empilement d'accumulateurs à emballage souple, dont les bornes (languettes) sont mises en contact et reliées électriquement entre elles au moyen de boulons qui les traversent. Un tel module présente également de nombreux inconvénients. Il est tout d'abord nécessaire de réaliser au préalable un perçage de chacune des languettes, avec probablement un minimum de précision, ce qui n'est pas aisé compte-tenu de leur épaisseur. En outre, le contact électrique entre languettes est proportionnel à l'effort procuré par le couple de serrage d'un boulon. Ce couple est à doser précisément pour ne pas déformer chacune des plaques de fermeture en face avant et face arrière du module. Enfin, l'effort de mise en compression des languettes par ce serrage de boulons est localisé principalement dans la partie haute du module, i.e. dans la zone des connexions électriques entre languettes.

Le brevet CN105226320B décrit un module de batterie à empilement dans lequel chaque accumulateur est logé dans un support avec ses bornes (languettes) assemblées par soudage à des plots portés par le support. Les inconvénients d'un tel module sont également nombreux. A l'assemblage du module, c'est-à-dire des différents supports d'accumulateurs entre eux, on constate qu'il n'y a pas de mise en compression localisée au niveau des connexions électriques Il y a un montage avec mise en compression des différents étages constitués chacun par un support avec son accumulateur, par l'insertion de longues tiges filetées au travers de fixations de chaque support, chaque fixation étant espacée d'une pièce formant entretoise pour maintenir une épaisseur constante après serrage du module. Cet assemblage nécessite un grand nombre de référence de pièces le plus souvent métalliques qui augmentent considérablement la masse totale du module, et donc nuisent à la densité massique du module.

La demanderesse a également proposé dans la demande de brevet déposée le 15 octobre 2020 sous le n° FR2010587, un module de batterie comprenant une pluralité de supports individuels empilés les uns sur les autres et dans chacun desquels est logé un accumulateur à emballage souple, avec un assemblage mécanique des supports individuels entre eux par des moyens de clipsage/encliquetage positionnés sur les bords longitudinaux de chaque support individuel. Cette solution est intéressante dans bon nombre de configurations. Cependant, dans certaines configurations d'accumulateurs, la tenue mécanique des moyens de clipsage/encliquetage peut ne pas être suffisante ou au prix d'un surdimensionnement. Également, dans certains environnements contraignants en termes d'espace, il s'avère important de rendre apparent à minima toutes les pièces de fixation entre supports d'accumulateurs car cela peut présenter un risque d'accrochage voire de destruction par les autres pièces mécaniques autour. Or, les moyens de clipsage/encliquetage ne répondent pas à cette possibilité.

Par ailleurs, le mode de connexion électrique entre les différents accumulateurs n'est pas optimal pour la réalisation d'un module de batterie.

Il existe ainsi un besoin d'améliorer les modules de batterie à empilement d'accumulateurs à emballage souple, notamment afin de pallier au moins une partie des inconvénients précités.

Le but de l'invention est de répondre au moins en partie à ce besoin.

### Exposé de l'invention

Pour ce faire, l'invention concerne, sous l'un de ses aspects, un module de batterie comprenant :
- une pluralité d'accumulateurs, en particulier de géométrie prismatique, comprenant chacun au moins une cellule électrochimique C formée d'une cathode, d'une anode et d'un électrolyte intercalé entre la cathode et l'anode, et un emballage souple agencé pour contenir avec étanchéité la cellule électrochimique tout en étant traversé par une partie de deux languettes formant les pôles ou bornes qui s'étendent dans le plan de la cellule électrochimique;
- une pluralité de cadres borgnes, allongés selon une direction longitudinale et latérale, chaque cadre borgne formant un support avec logement d'un de la pluralité d'accumulateurs, les supports étant empilés et fixés les uns sur les autres selon une direction d'empilement orthogonale aux directions longitudinale et latérale;
- une pluralité de paires de barrettes métalliques, chaque paire de barrettes étant insérée dans un logement ménagé dans un des bords latéraux et/ou longitudinaux d'un des supports pour former une paire de cosses, une portion de chaque cosse étant en contact avec pression contre un pôle ou borne d'un des accumulateurs tandis qu'une autre portion de chaque cosse forme un moyen de liaison par complémentarité de formes, les paires de cosses étant alignées selon deux rangées ;
- au moins deux plaquettes métalliques, formant des busbars, chacun des busbars comprenant une portion formant un moyen de liaison par complémentarité de formes avec celui de l'autre portion d'une des cosses d'une paire, de sorte qu'une fois les supports empilés et fixés, chaque busbar est lié avec et relie électriquement les cosses d'une même rangée.

On rappelle ici que le sens usuel qui est celui l'invention, donné à une liaison par complémentarités de formes : les formes géométriques des pièces sont complémentaires et assurent la liaison directe entre elles.

On précise que l'expression « chaque support comprenant intérieurement » signifie la portion intérieure borgne du support.

L'expression « contact avec pression » signifie un contact mécanique avec une pression appliquée.

Avantageusement, les autres portions de chaque cosse et la portion de chaque busbar sont configurées respectivement en tenons et mortaises de sorte à constituer des liaisons à queue d'aronde.

Avantageusement encore, les portions de chaque cosse et de chaque busbar constituant les liaisons à queue d'aronde ayant une section transversale en T.

Les portions de chaque cosse et de chaque busbar constituant les liaisons par complémentarité de formes sont ajustées entre elles avec un jeu de serrage.

Avantageusement, toutes les cosses sont identiques entre elles, et de préférence dans le même matériau que les busbars, de préférence encore en aluminium, en cuivre ou leurs alliages. Proposer des cosses de même matériau, de même surface et de même forme, offre une interface externe commune pour standardiser la ou les liaisons électriques avec des busbars pour mise en série ou parallèle des cosses des supports du module de batterie selon l'invention.

L'aluminium constitue un matériau privilégié pour les cosses du module, pour les raisons suivantes :
- il présente une faible densité, typiquement une masse volumique de 2,7 g/cm3 plus faible que celle du cuivre ou du nickel, qui est 8,9 g/cm3. Cela permet un gain de masse significatif pour chaque sous-ensemble du module de batterie, constitué d'un support équipé de deux cosses ;
- il présente une très bonne conductivité électrique : à masse égale au cuivre, l'aluminium présente une conductivité électrique deux fois supérieure.
- il est facilement soudable par un procédé de soudage laser. On peut ainsi envisager d'utiliser des busbars en aluminium qui seront soudés en direct sur les busbars en aluminium du module selon l'invention en lieu et place des busbars selon l'état de l'art en cuivre, qui sont vissés sur des bornes terminales.

Selon un mode de réalisation avantageux, le module comprend des moyens de fixation entre eux des supports empilés, un verrouillage mécanique des moyens de fixation étant réalisée par l'insertion, selon la direction d'empilement des supports, des deux plaquettes métalliques formant des busbars.

Selon ce mode et une variante de réalisation avantageuse, chaque support comprend intérieurement, le long d'un de ses bords longitudinaux et/ou latéraux, en tant que moyens de fixation, des moyens de liaison par complémentarité de formes avec au moins un support adjacent; les moyens de liaison étant agencés de sorte à ne pas faire saillie à l'extérieur de l'empilement une fois les liaisons réalisées.

Avantageusement, le module est configuré de sorte que les bords longitudinaux du module forment une surface plane une fois les liaisons réalisées.

Selon un mode de réalisation avantageux, les moyens de liaison par complémentarité de formes comprennent, pour chaque support:
- une pluralité de crans répartis à distance les uns des autres le long d'au moins un des bords longitudinaux d'une des faces principales du support;
- une pluralité de créneaux répartis à distance les uns des autres le long d'au moins un des bords longitudinaux de l'autre des faces principales du support, de telle sorte qu'un coulissement longitudinal relatif entre deux supports adjacents, provoque l'engagement de chaque cran d'un bord longitudinal dans un créneau d'un bord longitudinal en définissant une position de fermeture des deux supports.

Selon ce mode et une variante de réalisation avantageuse, les moyens de liaison par complémentarité de formes comprennent, pour chaque support:
- au moins un cran agencé sur un des bords latéraux d'une des faces principales du support;
- au moins un créneau agencé sur un des bords latéraux de l'autre des faces principales du support, de telle sorte que lors du coulissement longitudinal relatif entre deux support adjacents, le cran d'un bord latéral support vient s'engager dans un créneau latéral dans la position de fermeture des deux supports.

Avantageusement, les crans et les créneaux sont configurés respectivement en tenons et mortaises de sorte à constituer des liaisons à queue d'aronde.

Avantageusement encore, les crans et les créneaux ont une section transversale en T. Selon une variante avantageuse l'autre portion de chaque cosse est emboîtée dans la portion de cosse adjacente au sein de l'empilement.

Selon cette variante avantageuse, l'autre portion de chaque cosse et la portion de cosse adjacente au sein de l'empilement étant configurées respectivement en tenon et mortaise de sorte à constituer une liaison à queue d'aronde.

De préférence, l'ensemble des cosses d'une même polarité est relié électriquement entre elles en formant un busbar.

### Selon une autre variante de réalisation avantageuse,

Pour une application Li-ion, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂ , le silicium ;
- le matériau d'électrode(s) positive(s) est choisi dans le groupe comportant LiFePO₄, LiCoO₂, LiNi_{0.33}Mn_{0.33}Co_{0.33}O₂.

L'invention a encore pour objet un pack-batterie comprenant au moins deux modules de batterie tels que décrits précédemment, reliés électriquement entre eux au moyen d'au moins un busbar relié électriquement aux plaquettes métalliques des modules , à l'extérieur de l'empilement des modules.

L'invention a enfin pour objet un procédé de réalisation d'un module de batterie tel que décrit précédemment, comprenant les étapes suivantes :
i/ insertion de chaque paire de barrettes formant cosses dans les logements de chaque support, de sorte à ce qu'elle soit maintenue par ceux-ci;
ii/ logement de chaque accumulateur dans un de la pluralité des supports avec les bornes de sortie de chaque accumulateur en regard de la paire de cosse ;
iii/ empilement par coulissement relatif le long de leurs bords longitudinaux entre les supports adjacents jusqu'à réaliser les liaisons par complémentarité de formes entre eux. ;
iv/ coulissement de chaque plaquette métallique formant un busbar, transversalement à l'empilement, le long des cosses d'une même rangée jusqu'à réaliser une liaison par complémentarités de formes entre eux afin à la fois de relier électriquement les cosses de même rangée entre elles et verrouiller mécaniquement le coulissement relatif entre les supports adjacents.

Ainsi, l'invention consiste essentiellement à définir un module de batterie comprenant une pluralité de supports individuels empilés et fixés les uns sur les autres et dans chacun desquels est logé un accumulateur à emballage souple (« pouch »), chaque support logeant des barrettes métalliques formant des cosses en rangées qui viennent réaliser individuellement une liaison électrique par contact avec pression avec une borne (languette) d'un des accumulateurs et par complémentarités de formes avec des busbars.

On s'affranchit ainsi de toute soudure à réaliser pour garantir les connexions électriques au sein d'un même module.

En outre dans un mode de fixation des supports entre eux dans lequel la fermeture entre deux supports adjacents est obtenue par un unique mouvement de translation selon leur axe longitudinal, la mise en place des busbars, transversalement à celui-ci, a une fonction supplémentaire de verrouiller mécaniquement cette fermeture..

Au final, l'invention apporte de nombreux avantages parmi lesquels on peut citer:
- des liaisons électriques en sortie d'accumulateurs qui sont obtenues par complémentarités de formes et ne sont donc pas une liaison vissée, ou soudée comme selon l'état de l'art avec leurs inconvénients afférents comme suit ;
- la possibilité d'utiliser une nature de matériau différente pour la cosse de sortie ou terminal de chaque support, par rapport à celle des languettes d'accumulateurs. L'avantage qui en découle est de standardiser toutes les cosses mises en œuvre pour le module de batterie. Cette standardisation permet notamment de souder les deux cosses en aluminium par support à un busbar suivant un même procédé d'assemblage.

- du fait des liaisons électriques sans soudure entre cosses de chaque support et languettes de l'accumulateur qu'il loge, il devient plus facile de récupérer chaque accumulateur dans le cas d'une étape de démontage d'un module de batterie, pour un remplacement en cas de défectuosité ou pour le recyclage ;
- la possibilité d'avoir une double fonction pour les busbars montés par complémentarités de formes sur les rangées de cosse, à savoir la liaison électrique entre cosses des différents accumulateurs et le verrouillage mécanique transversal des supports lorsqu'ils sont fixés les uns aux autres par coulissement selon leur axe longitudinal ;
- la possibilité d'un démontage qui plus est aisé d'un module de batterie selon l'invention, ce qui est avantageux notamment en cas d'opération de maintenance, par exemple de remplacement d'un accumulateur défectueux au sein du module.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion de format prismatique avec son emballage souple selon l'état de l'art.
[Fig 3] la figure 3 est une vue en perspective d'un accumulateur lithium-ion de format prismatique avec son emballage souple selon l'état de l'art.
[Fig 4] la figure 4 est une vue en en perspective d'une partie d'un module de batterie selon l'invention, avant assemblage et après assemblage entre deux cadres borgnes formant des supports dans lesquels sont logés individuellement des accumulateurs.
[Fig 5] la figure 5 est une vue en perspective montrant une face principale d'un support de module de batterie selon l'invention.
[Fig 6] la figure 6 est une vue en perspective montrant l'autre face principale d'un support de module de batterie selon l'invention.
[Fig 7A] la figure 7A est une vue en perspective montrant une étape préalable d'assemblage entre deux supports logeant des accumulateurs d'un module de batterie selon l'invention.
[Fig 7B] la figure 7B est une vue en perspective montrant l'assemblage réalisé entre les supports logeant des accumulateurs d'un module de batterie selon l'invention.
[Fig 7C] la figure 7C est une vue en perspective montrant l'étape d'amenée des busbars avant leur liaison par complémentarités de formes avec les cosses d'un module de batterie selon l'invention.
[Fig 7D] la figure 7D est une vue en perspective montrant l'étape de coulissement des busbars pour finaliser leur liaison par complémentarités de formes avec les cosses d'un module de batterie selon l'invention.
[Fig 8] la figure 8 est une vue en coupe transversale montrant une partie des moyens de liaison à queue d'aronde entre une cosse et un busbar d'un module de batterie selon l'invention.
[Fig 9] la figure 9 est une vue en coupe transversale montrant une variante de réalisation de la figure 8.

### Description détaillée

Les figures 1 à 3 sont relatives à des exemples différents d'accumulateur Li-ion, d'emballages souples selon l'état de l'art. Ces figures 1 à 3 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 9.

Dans l'ensemble de la présente demande, les termes « inférieur », « supérieur », « bas », « haut », « dessous » et « dessus » sont à comprendre par référence par rapport à un module de batterie selon l'invention avec des accumulateurs Li-ion positionnés à l'horizontale.

De même, les termes « longitudinaux » et « latéraux » sont à considérer par rapport à la direction longitudinale X selon laquelle un support d'accumulateur conforme à l'invention est allongé.

Dans les exemples illustrés ci-après, les accumulateurs A1 à AN+1 illustrés sont de format prismatique, à emballage souple 6, usuellement appelés « pouch ».

Les accumulateurs A1 à AN+1 peuvent être reliés électriquement en série et/ou en parallèle dans un module selon l'invention. Le montage en série et/ou en parallèle électrique est fonction de l'orientation des accumulateurs.

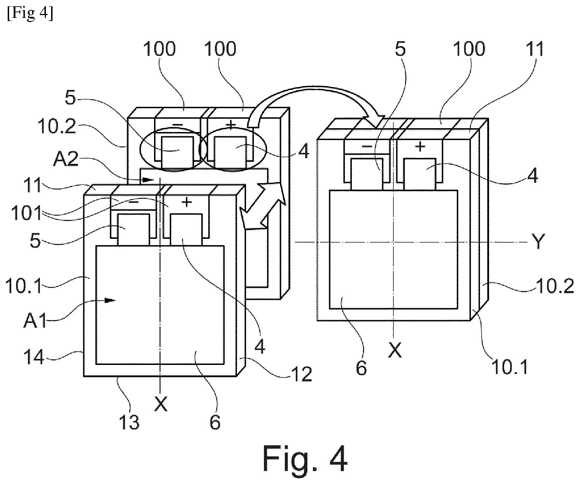

On a représenté en figure 4, un exemple d'une partie de module de batterie M selon l'invention comprenant plusieurs accumulateurs adjacents A1, A2, ..AN, AN+1.

Chaque accumulateur A1, A2 ..AN, AN+1 est logé dans un cadre borgne 10.1, 10.2, ..10N, 10N+1 allongé selon une direction longitudinale (X) et selon une direction latérale (Y), qui forme ainsi un support de l'accumulateur.

Chacun des supports 10.1, 10.2 , ..10N, 10N+1 est de forme générale parallélépipédique rectangle avec deux bords latéraux 11, 13 reliés entre eux par deux bords longitudinaux 12, 14 parallèle à la direction longitudinale (X).

Les supports 10.1, 10.2 , ..10N, 10N+1 sont empilés les uns sur les autres, de préférence en étant emboités au moins partiellement les uns dans les autres, selon une direction d'empilement (Z) orthogonale aux directions (X) et (Y).

Chacun des supports 10.1, 10.2 , ..10N, 10N+1 est fixé au(x) support(s) adjacent(s) par des moyens de liaison 2, agencés sur au moins un des bords longitudinaux 12, 14 de chaque support. Ces moyens de liaison 2 permettent d'obtenir des liaisons mécaniques robustes entre les différents supports empilés.

Dans l'exemple illustré, les moyens de liaison 2 constituent des liaisons par complémentarité de formes.

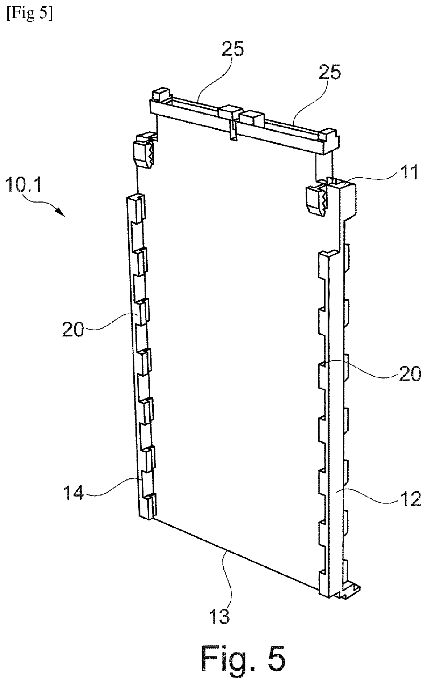

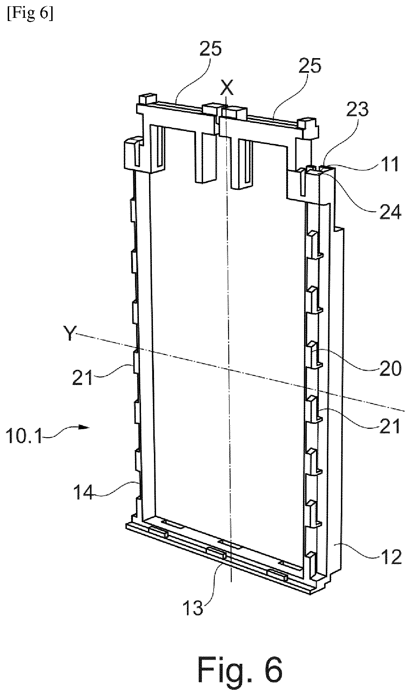

Plus précisément, comme montré aux figures 5 et 6, chaque support 10.1 intègre :
- une pluralité de crans 20 répartis à distance les uns des autres le long de chacun des bords longitudinaux 12, 14 d'une des faces principales du support;
- une pluralité de créneaux 21 répartis à distance les uns des autres le long de chacun des bords longitudinaux 12, 14 de l'autre des faces principales du support.

De préférence, ces crans 20 et ces créneaux 21 sont configurés respectivement en tenons et mortaises de sorte à constituer des liaisons à queue d'aronde.

L'agencement relatif entre les crans 20 et créneaux 21 est réalisé de telle sorte qu'un coulissement longitudinal relatif entre deux supports adjacents 10.1, 10.2 ..., provoque l'engagement de chaque cran 20 dans un créneau 21 en définissant une position de fermeture des deux supports 10.1, 10.2 ...

Autrement dit, les crans 20 de la face principale inférieure de l'accumulateur 10.2 du dessus viennent s'engager individuellement par coulissement selon l'axe longitudinal X dans les créneaux 21 de la face principale supérieure de l'accumulateur 10.1 du dessous.

Comme montré également, la construction et l'agencement relatif entre crans 20 et créneaux définit une course de coulissement L de longueur limitée par rapport à la longueur hors-tout des accumulateurs A1, A2, ...et des cadres-support 10.1, 10.2...On évite ainsi d'endommager les accumulateurs et leurs connectiques 4, 5 lors de l'assemblage du module.

Pour bloquer la fermeture entre supports 10.1, 10.2...on prévoit en outre en tant que moyens supplémentaire de liaison 2 :
- au moins un cran 23 agencé sur un des bords latéraux 11, 13 d'une des faces principales du support;
- au moins un créneau 24, sous la forme d'une rainure, agencé sur un des bords latéraux 11, 13 de l'autre des faces principales du support.

L'agencement relatif entre les crans 23 et rainures 24 est réalisé de telle sorte que lors du coulissement longitudinal relatif entre deux support adjacents 10.1, 10.2, le cran 23 vient s'engager dans une rainure 24 dans la position de fermeture des deux supports.

Autrement dit, concomitamment à la fermeture sur les bords longitudinaux 13, 14 entre supports adjacents 10.1, 10.2, le blocage de cette fermeture est réalisé par l'insertion des crans 23 dans les rainures 24.

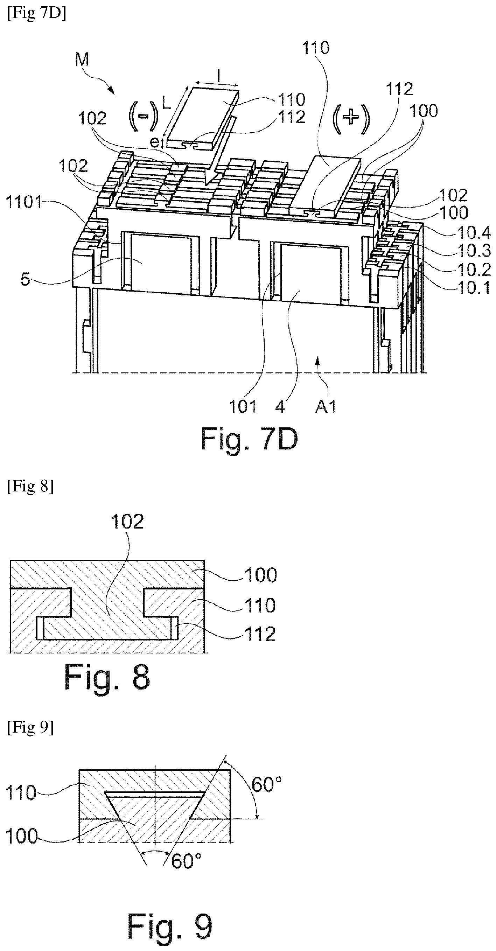

De préférence, à l'instar des crans 20 et créneaux 21, les crans 23 et rainures 24 sont configurés respectivement en tenons et mortaises de sorte à constituer des liaisons à queue d'aronde. On peut par exemple prévoir une section en T (figure 8) ou en trapèze (figure 9) pour réaliser ces liaisons à queue d'aronde.

Avantageusement, tous les moyens de liaison 20 à 24 sont agencés de sorte à ne pas faire saillie à l'extérieur de l'empilement une fois les liaisons réalisées.

Autrement dit, lorsque les liaisons par complémentarités de forme sont réalisées, tous les longitudinaux 13, 14 forment une même surface plane, lisse. Il en va de même avec les bords latéraux 11, 13.

Ainsi, une fois le module M assemblé, il n'y a pas de risque d'accrocher inopinément voire dégrader les moyens de liaison 2 car ils ne sont pas accessibles depuis l'extérieur du module.

Chacun des supports 10.1, 10.2, ..10N, 10N+1 forme avec les moyens de liaison 2 une seule pièce monolithique en matériau plastique isolant électrique. Un support peut par exemple être en polyétherimide (PEI), en acrylonitrile butadiène styrène (ABS), en polyamide (PA) ou en acide polylactique (PLA). Le procédé de réalisation privilégié est l'impression 3D. Les matériaux imprimables par 3D sont généralement de type : PLA, ABS, PA12, etc...Il est cependant tout à fait possible de réaliser ces pièces par usinage, et les matériaux utilisés seraient de type : POM C, Delrin (POM), FR4, PEEK, etc...

Pour assurer les liaisons électriques entre les différents accumulateurs A1- AN+1 d'un même module de batterie M, chaque support 10.1, 10.2 , ..10N, 10N+1 comporte une paire de fentes 25 dans chacune desquelles vient s'insérer une barrette métallique 100 pour former une paire de cosses que l'on peut également désigner comme cosses terminales ou de sortie.

Les cosses 100 sont alignées selon deux rangées parallèles qui s'étendent selon la direction Z.

Dans l'empilement du module M, une portion 101 de chaque cosse 100 est en contact avec pression contre un pôle ou borne 4, 5 d'un des accumulateurs A1 à AN+1.

Une autre portion 102 de chaque cosse 100 est destinée à être emboîtée par complémentarité de formes dans une rainure 112 d'une plaquette métallique formant un busbar 110.

Ainsi, selon l'invention, une fois les supports 10.1, 10.2 empilés et fixés, chaque busbar 110 loge toutes les cosses 100 d'une même rangée au sein d'un même module et les relie ainsi électriquement.

Les deux busbars 110 reliant chacun les cosses 100 d'une même rangée, permettent donc d'assurer la continuité électrique est assurée entre tous les accumulateurs A1 à AN+1.

Avantageusement, toutes les cosses 100 sont identiques entre elles au sein d'un même module de batterie, c'est-à-dire de mêmes dimensions et réalisées dans le même matériau. De préférence, ces cosses 100 sont dans le même matériau constitutif que les busbars 110, avantageusement en aluminium ou en cuivre.

Ainsi, aucune soudure entre cosses 100 d'une même polarité n'est à réaliser dans un module M donné.

En outre, une fois les barrettes 110 montées transversalement aux directions longitudinales (X) des supports 10.1, 10.2.., elles verrouillent la fixation par coulissement de ces derniers.

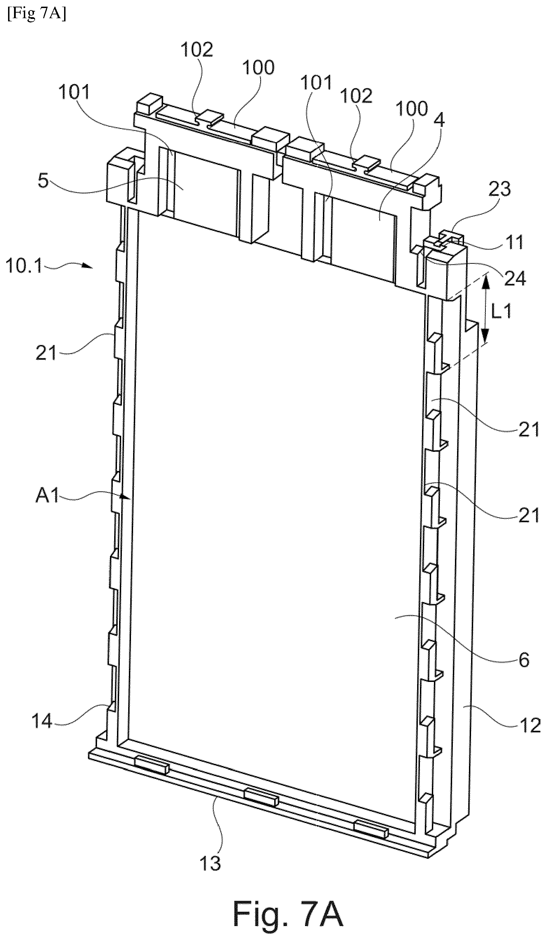

On récapitule maintenant en référence aux figures 7A à 7D l'assemblage par complémentarités de formes entre supports adjacents puis la connexion électrique et verrouillage mécanique par les busbars 110. afin de constituer un module de batterie selon l'invention.

Etape i/ : on insère une paire de barrettes formant cosses 100 dans les fentes 25 de chaque support 10.1, 10.2, 10.3, 10.4 prévues à cet effet, de sorte à ce que ces cosses 100 soient maintenues.

Etape ii/ : on vient loger chaque accumulateur A1, A2,A3, A4 dans un support donné 10.1, 10.2, 10.3, 10.4 en positionnant les bornes de sortie (languettes) 4, 5 de chaque accumulateur en regard de la paire de cosse 100 (figure 7A). On peut agencer les accumulateurs A1, A2, A3, A4 avec toutes les languettes 4 en regard et toutes les languettes 5 en regard ou alterner à souhait de sorte respectivement à relier électriquement les accumulateurs A1 à A4 en série ou en parallèle au sein du même module M.

Etape iii/ : on procède alors à l'empilement par coulissement relatif le long de leurs bords longitudinaux 12, 14 entre les supports adjacents 10.1, 10.2, 10.3, 10.4 jusqu'à réaliser les liaisons par complémentarité de formes entre eux.

Plus précisément, on amène un support 10.2 en regard d'un support adjacent 10.1 (puis on vient les faire coulisser relativement l'un par rapport à l'autre de sorte que les crans 20 s'engagent dans les créneaux 21 selon une course de translation prédéfinie L1. Les supports 10.1, 10.2, 10.3, 10.4 sont ainsi fermés et leurs bords longitudinaux 12 ou 14 forment une seule surface plane.

Simultanément, les crans 23 s'engagent dans les rainures 24 et bloquent ainsi la fermeture entre supports adjacents 10.1, 10.2, 10.3, 10.4.

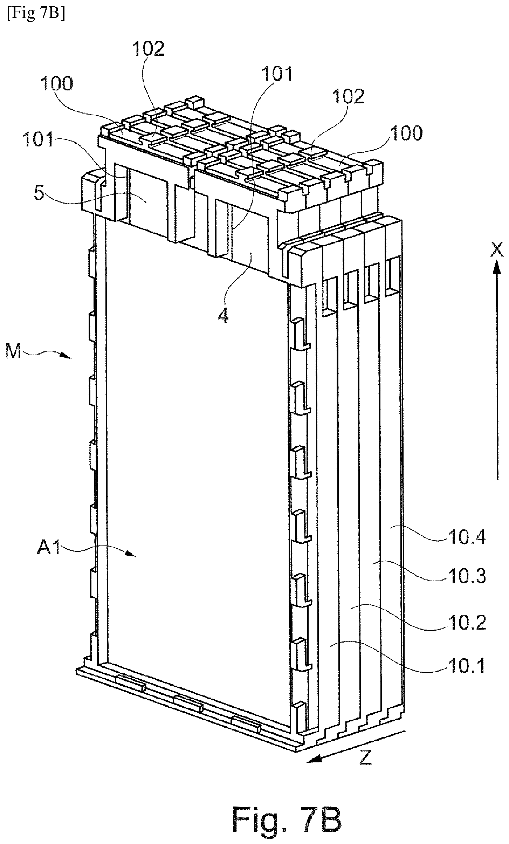

Autrement dit, l'assemblage par empilement et fixation par coulissement du module est achevé (figure 7B).

A l'intérieur des supports 10.1, 10.2, 10.3, 10.4, la fermeture par coulissement entre supports a provoqué la mise en contact avec pression entre les portions 101 des cosses 100 et les languettes 4, 5 formant les bornes de sortie (figure 7B).

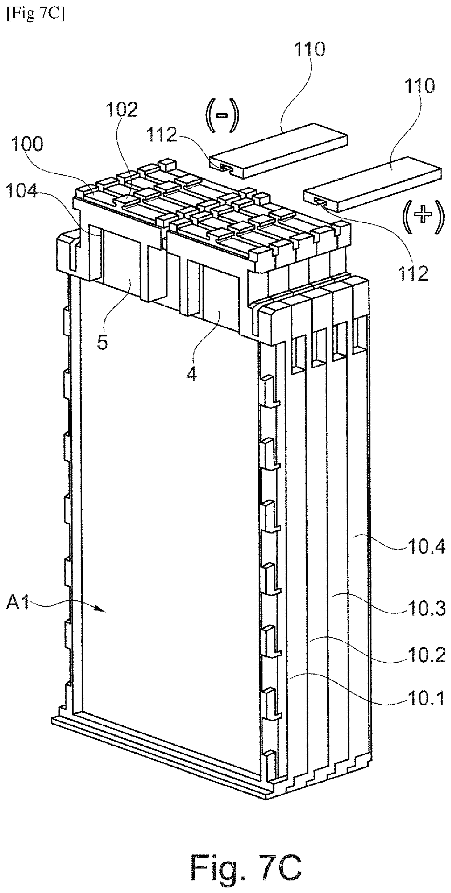

Etape iv/: on approche chaque plaquette métallique 110 formant un busbar en regard d'une rangée de cosses (figure 7C).

Puis on fait coulisser chacun des busbars 110 selon la direction Z, le long des cosses 100 d'une même rangée jusqu'à réaliser une liaison par complémentarités de formes entre leurs portions 102, 112 de formes complémentaires prévues à cet effet (figure 7D).

Une fois, le coulissement effectué, chaque busbar 110 relie électriquement les cosses 100 de même rangée entre elles et verrouille mécaniquement le coulissement relatif entre les supports adjacents 10.1 à 10.4 selon l'axe longitudinal X.

Autrement dit, le montage des deux busbars 110 sur les cosses 100 verrouillent mécaniquement l'assemblage du module M et le démontage des supports par coulissement relatif entre eux n'est plus possible.

Chaque plaquette métallique 110 formant un busbar peut être réalisée par usinage, notamment par usinage au fil.

Les sections transversales 102, 112 respectivement des cosses 100 et busbars 110 peuvent être en forme de T complémentaires comme montré en figure 8. Alternativement on peut envisager une forme de trapèze comme montré en figure 9. D'autres formes peuvent être envisagées telles que portions de cercle, de rectangle, carré...

Quelle que soit la forme retenue, son dimensionnement est réalisé pour obtenir un guidage avec ajustement serré d'un busbar 110 lors de son coulissement. L'ajustement serré verrouille mécaniquement le déplacement relatif selon l'axe longitudinal X entre les supports 10.1 à 10.4 d'accumulateurs une fois le busbar 110 mis en place. L'ajustement serré permet également un contact électrique optimal à l'interface entre rainure 112 de busbar 110 et portions 102 de cosse 100, avec typiquement une résistance de contact inférieure à 100µΩ.

Le choix des dimensions (épaisseur e, longueur L, largeur 1) de chaque plaquette métallique 110 est fait en fonction du matériau constitutif de celle-ci et du niveau de courant à délivrer par le module M assemblé.

On pourra optimiser également ces dimensions pour améliorer le comportement thermique du module M. En particulier, les busbars 110 peuvent permettre d'évacuer plus rapidement vers l'extérieur du module M la chaleur générée par effet Joule au passage de forts niveaux de courant délivrés ou reçus par les accumulateurs A1, A2....

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'ensemble des exemples illustrés, les emballages souples des accumulateurs conformes à l'invention sont de format prismatique, l'invention s'applique bien entendu à tous les accumulateurs à emballage souple.

Un module de batterie M selon l'invention peut comprendre un nombre d'accumulateurs et de supports afférents empilés, qui est déterminé en fonction de chaque application.

Si dans l'ensemble des exemples illustrés, l'empilement et la fixation des supports d'accumulateurs est réalisé par coulissement relatif entre eux pour réaliser les liaisons par complémentarités de formes, on peut envisager toute autre solution d'empilement et fixation des supports entre eux bénéficiant d'un verrouillage mécanique par les deux plaquettes métalliques formant des busbars, notamment celle par clipsage/encliquetage décrite dans la demande FR2010587.

## Revendications

1. Module de batterie (M) comprenant :
- une pluralité d'accumulateurs, en particulier de géométrie prismatique (A1, A2...AN+1) comprenant chacun au moins une cellule électrochimique C formée d'une cathode (2), d'une anode (3) et d'un électrolyte intercalé entre la cathode et l'anode, et un emballage (6) souple agencé pour contenir avec étanchéité la cellule électrochimique tout en étant traversé par une partie de deux languettes (4, 5), formant les pôles ou bornes qui s'étendent dans le plan de la cellule électrochimique;
- une pluralité de cadres borgnes (10.1, 10.2...10.N+1), allongés selon une direction longitudinale (X) et latérale (Y), chaque cadre borgne formant un support avec logement d'un de la pluralité d'accumulateurs, les supports étant empilés et fixés les uns sur les autres selon une direction d'empilement (Z) orthogonale aux directions longitudinale et latérale (X,Y);
- une pluralité de paires de barrettes métalliques (100), chaque paire de barrettes étant insérée dans un logement ménagé dans un des bords latéraux (11, 13) et/ou longitudinaux (12, 14) d'un des supports pour former une paire de cosses, une portion (101) de chaque cosse étant en contact avec pression contre un pôle ou borne d'un des accumulateurs tandis qu'une autre portion (102) de chaque cosse forme un moyen de liaison par complémentarité de formes; les portions (102) des paires de cosses étant alignées selon deux rangées ;
- au moins deux plaquettes métalliques (110), formant des busbars, chacun des busbars comprenant une portion (112) formant un moyen de liaison par complémentarité de formes avec celui de l'autre portion d'une des cosses d'une paire, de sorte qu'une fois les supports empilés et fixés, chaque busbar est lié avec et relie électriquement les cosses d'une même rangée.

2. Module de batterie (M) selon la revendication 1, les autres portions (102) de chaque cosse et la portion (112) de chaque busbar étant configurées respectivement en tenons et mortaises de sorte à constituer des liaisons à queue d'aronde.

3. Module de batterie (M) selon la revendication 2, les portions de chaque cosse et de chaque busbar constituant les liaisons à queue d'aronde ayant une section transversale en T.

4. Module de batterie (M) selon l'une des revendications précédentes, les portions de chaque cosse et de chaque busbar constituant les liaisons par complémentarité de formes étant ajustées entre elles avec un jeu de serrage.

5. Module de batterie (M) selon l'une des revendications précédentes, les cosses et les busbars étant réalisées dans le même matériau, de préférence choisi parmi le cuivre, l'aluminium et leurs alliages.

6. Module de batterie (M) selon l'une des revendications précédentes, comprenant des moyens de fixation entre eux des supports empilés, un verrouillage mécanique des moyens de fixation étant réalisée par l'insertion, selon la direction d'empilement des supports, des deux plaquettes métalliques formant des busbars.

7. Module de batterie (M) selon la revendication 6, chaque support comprenant intérieurement, le long d'un de ses bords longitudinaux (12,14) et/ou latéraux (11, 13), en tant que moyens de fixation, des moyens de liaison par complémentarité de formes avec au moins un support adjacent; les moyens de liaison étant agencés de sorte à ne pas faire saillie à l'extérieur de l'empilement une fois les liaisons réalisées.

8. Module de batterie (M) selon la revendication 7, le module étant configuré de sorte que les bords longitudinaux (12, 14) du module forment une surface plane une fois les liaisons réalisées.

9. Module de batterie (M) selon la revendication 7 ou 8, les moyens de liaison (20, 21) par complémentarité de formes comprenant, pour chaque support:
- une pluralité de crans répartis à distance les uns des autres le long d'au moins un des bords longitudinaux d'une des faces principales du support;
- une pluralité de créneaux répartis à distance les uns des autres le long d'au moins un des bords longitudinaux de l'autre des faces principales du support, de telle sorte qu'un coulissement longitudinal relatif entre deux supports adjacents, provoque l'engagement de chaque cran d'un bord longitudinal dans un créneau d'un bord longitudinal en définissant une position de fermeture des deux supports.

10. Module de batterie (M) selon la revendication 9, les moyens de liaison (23, 24) par complémentarité de formes comprenant, pour chaque support:
- au moins un cran agencé sur un des bords latéraux d'une des faces principales du support;
- au moins un créneau agencé sur un des bords latéraux de l'autre des faces principales du support, de telle sorte que lors du coulissement longitudinal relatif entre deux support adjacents, le cran d'un bord latéral support vient s'engager dans un créneau latéral dans la position de fermeture des deux supports.

11. Module de batterie (M) selon l'une des revendications 9 ou 10, les crans et les créneaux étant configurées respectivement en tenons et mortaises de sorte à constituer des liaisons à queue d'aronde.

12. Module de batterie (M) selon la revendication 11, les crans et les créneaux ayant une section transversale en T.

13. Module de batterie (M) selon l'une des revendications précédentes, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂, le silicium ;
- le matériau d'électrode(s) positive(s) est choisi dans le groupe comportant LiFePO₄, LiCoO₂, LiNi_{0.33}Mn_{0.33}Co_{0.33}O₂.

14. Pack-batterie comprenant au moins deux modules de batterie (M) selon l'une des revendications précédentes reliés électriquement entre eux au moyen d'au moins un busbar relié électriquement aux plaquettes métalliques des modules à l'extérieur de l'empilement des modules.

15. Procédé de réalisation d'un module de batterie (M) selon l'une des revendications 7 à 13, comprenant les étapes suivantes :
i/ insertion de chaque paire de barrettes formant cosses dans les logements de chaque support, de sorte à ce qu'elle soit maintenue par ceux-ci;
ii/ logement de chaque accumulateur dans un de la pluralité des supports avec les bornes de sortie de chaque accumulateur en regard de la paire de cosse ;
iii/ empilement par coulissement relatif le long de leurs bords longitudinaux entre les supports adjacents jusqu'à réaliser les liaisons par complémentarité de formes entre eux ;
iv/ coulissement de chaque plaquette métallique formant un busbar, transversalement à l'empilement, le long des cosses d'une même rangée jusqu'à réaliser une liaison par complémentarités de formes entre eux afin à la fois de relier électriquement les cosses de même rangée entre elles et verrouiller mécaniquement le coulissement relatif entre les supports adjacents.

## Patentansprüche

1. Batteriemodul (M), das Folgendes aufweist:
- eine Vielzahl von Akkumulatoren, insbesondere mit prismatischer Geometrie (A1, A2 ... AN+1), aufweisend jeweils mindestens eine elektrochemische Zelle C, die aus einer Kathode (2), einer Anode (3) und einem zwischen der Kathode und der Anode angeordneten Elektrolyten gebildet ist, und eine flexible Verpackung (6), die so ausgebildet ist, dass sie die elektrochemische Zelle dicht umschließt, während sie von einem Teil von zwei Zungen (4, 5) durchquert wird, die die Pole oder Klemmen bilden, die sich in der Ebene der elektrochemischen Zelle erstrecken;
- eine Vielzahl von Blindrahmen (10.1, 10.2 ... 10.N+1), die sich entlang einer Längsrichtung (X) und Querrichtung (Y) erstrecken, wobei jeder Blindrahmen einen Träger mit Aufnahme für einen der Vielzahl von Akkumulatoren bildet, wobei die Träger entlang einer Stapelrichtung (Z) orthogonal zu den Längs- und Querrichtungen (X, Y) gestapelt und aneinander befestigt sind;
- eine Vielzahl von metallischen Leistenpaaren (100), wobei jedes Leistenpaar in eine Aufnahme eingesetzt ist, die in einem der seitlichen Ränder (11, 13) und/oder Längsränder (12, 14) eines der Träger ausgebildet ist, um ein Paar von Anschlussfahnen zu bilden, wobei ein Abschnitt (101) jeder Anschlussfahne in Druckkontakt mit einem Pol oder einer Klemme eines der Akkumulatoren steht, während ein anderer Abschnitt (102) jeder Anschlussfahne ein Mittel zur formschlüssigen Verbindung bildet; wobei die Abschnitte (102) der Paare von Anschlussfahnen entlang von zwei Reihen ausgerichtet sind;
- mindestens zwei Metallplatten (110), die Stromschienen bilden, wobei jede der Stromschienen einen Abschnitt (112) umfasst, der ein Mittel zur formschlüssigen Verbindung mit dem des anderen Abschnitts einer der Anschlussfahnen eines Paares bildet, so dass nach dem Stapeln und Befestigen der Träger jede Stromschiene mit den Anschlussfahnen einer selben Reihe elektrisch verbunden ist und diese elektrisch verbindet.

2. Batteriemodul (M) nach Anspruch 1, wobei die anderen Abschnitte (102) jeder Anschlussfahne und der Abschnitt (112) jeder Stromschiene jeweils als Zapfen und Schlitze ausgebildet sind, so dass sie eine Schwalbenschwanzverbindung bilden.

3. Batteriemodul (M) nach Anspruch 2, wobei die Abschnitte jeder Anschlussfahne und jeder Stromschiene, die die Schwalbenschwanzverbindung bilden, einen T-förmigen Querschnitt haben.

4. Batteriemodul (M) nach einem der vorhergehenden Ansprüche, wobei die Abschnitte jeder Anschlussfahne und jeder Stromschiene, die die formschlüssigen Verbindungen bilden, untereinander mit einem Spannspiel justiert sind.

5. Batteriemodul (M) nach einem der vorhergehenden Ansprüche, wobei die Anschlussfahnen und die Stromschienen aus demselben Material ausgeführt sind, das vorzugsweise aus Kupfer, Aluminium und deren Legierungen gewählt ist.

6. Batteriemodul (M) nach einem der vorhergehenden Ansprüche, das Mittel zum Befestigen der gestapelten Träger untereinander aufweist, wobei eine mechanische Verriegelung der Befestigungsmittel durch das Einsetzen der beiden Stromschienen bildenden Metallplatten entlang der Stapelrichtung der Träger hergestellt wird.

7. Batteriemodul (M) nach Anspruch 6, wobei jeder Träger innen, entlang eines seiner Längsränder (12,14) und/oder seitlichen Ränder (11, 13), als Befestigungsmittel Mittel zur formschlüssigen Verbindung mit mindestens einem benachbarten Träger aufweist; wobei die Verbindungsmittel so ausgebildet sind, dass sie nach dem Herstellen der Verbindungen nicht aus dem Stapel herausragen.

8. Batteriemodul (M) nach Anspruch 7, wobei das Modul so ausgestaltet ist, dass die Längsränder (12, 14) des Moduls nach dem Herstellen der Verbindungen eine ebene Fläche bilden.

9. Batteriemodul (M) nach Anspruch 7 oder 8, wobei die Mittel (20, 21) zur formschlüssigen Verbindung jeden Träger Folgendes aufweisen:
- eine Vielzahl von Rasten, die im Abstand voneinander entlang mindestens eines der Längsränder einer der Hauptseiten des Trägers verteilt sind;
- eine Vielzahl von Lücken, die im Abstand voneinander entlang mindestens eines der Längsränder der anderen der Hauptseiten des Trägers verteilt sind, so dass eine relative Längsverschiebung zwischen zwei benachbarten Trägern das Eingreifen jeder Raste eines Längsrandes in eine Lücke eines Längsrandes bewirkt, wodurch eine Geschlossenstellung der beiden Träger definiert wird.

10. Batteriemodul (M) nach Anspruch 9, wobei die Mittel (23, 24) zur formschlüssigen Verbindung für jeden Träger Folgendes aufweisen:
- mindestens eine Raste, die an einem der seitlichen Ränder einer der Hauptseiten des Trägers ausgebildet ist;
- mindestens eine Lücke, die an einem der seitlichen Ränder der anderen der Hauptseiten des Trägers ausgebildet ist, so dass bei der relativen Längsverschiebung zwischen zwei benachbarten Trägern die Raste eines seitlichen Randes des Trägers in der Geschlossenstellung der beiden Träger in eine seitliche Lücke eingreift.

11. Batteriemodul (M) nach einem der Ansprüche 9 oder 10, wobei die Rasten und die Lücken jeweils als Zapfen und Schlitze ausgestaltet sind, so dass sie Schwalbenschwanzverbindungen bilden.

12. Batteriemodul (M) nach Anspruch 11, wobei die Rasten und die Lücken einen T-förmigen Querschnitt haben.

13. Batteriemodul (M) nach einem der vorhergehenden Ansprüche, wobei jeder Akkumulator ein Li-Ionen-Akkumulator ist, wobei:
- das Material der negativen Elektrode(n) aus der Gruppe gewählt ist, die Graphit, Lithium, Titanatoxid Li₄TiO₅O₁₂, Silizium umfasst;
- das Material der positiven Elektrode(n) aus der Gruppe gewählt ist, die LiFePO₄, LiCoO₂, LiNi_{0.33}Mn_{0.33}Co_{0.33}O₂ umfasst.

14. Batteriepack, das mindestens zwei Batteriemodule (M) nach einem der vorhergehenden Ansprüche aufweist, die untereinander elektrisch mittels mindestens einer Stromschiene verbunden sind, die außerhalb des Stapels des Moduls elektrisch mit den Metallplatten der Module verbunden ist.

15. Verfahren zur Herstellung eines Batteriemoduls (M) nach einem der Ansprüche 7 bis 13, das die folgenden Schritte aufweist:
i/ Einsetzen jedes Anschlussfahnen bildenden Leistenpaars in die Aufnahmen jedes Trägers, so dass es von diesen gehalten wird;
ii/ Aufnehmen jedes Akkumulators in einen der Vielzahl von Trägern, wobei die Ausgangsklemmen jedes Akkumulators dem Anschlussfahnenpaar zugewandt sind;
iii/ Stapeln durch relatives Verschieben entlang ihrer Längsränder zwischen benachbarten Trägern, bis die formschlüssigen Verbindungen zwischen ihnen hergestellt sind;
iv/ Verschieben jeder eine Stromschiene bildenden Metallplatte quer zu dem Stapel entlang der Anschlussfahnen einer selben Reihe, bis eine formschlüssige Verbindung zwischen ihnen hergestellt ist, um sowohl die Anschlussfahnen einer selben Reihe elektrisch miteinander zu verbinden als auch das relative Verschieben zwischen den benachbarten Trägern mechanisch zu verriegeln.

## Claims

1. Battery module (M) comprising:
- a plurality of accumulators, in particular of prismatic geometry (A1, A2...AN+1), each comprising at least one electrochemical cell C formed by a cathode (2), an anode (3) and an electrolyte interposed between the cathode and the anode, and a flexible package (6) arranged to contain the electrochemical cell in a sealed manner while having passing through it a portion of two tabs (4, 5) that form the poles or terminals which extend in the plane of the electrochemical cell;
- a plurality of blind frames (10.1, 10.2...10.N+1) that are elongate in a longitudinal direction (X) and lateral direction (Y), each blind frame forming a support with housing for one of the plurality of accumulators, the supports being stacked and fixed to one another in a stacking direction (Z) orthogonal to the longitudinal and lateral directions (X,Y);
- a plurality of pairs of metal strips (100), each pair of strips being inserted into a housing formed in one of the lateral edges (11, 13) and/or longitudinal edges (12, 14) of one of the supports to form a pair of lugs, one portion (101) of each lug being in pressing contact with a pole or terminal of one of the accumulators while another portion (102) of each lug forms a connecting means for interlocking through complementing shapes; the portions (102) of the pairs of lugs being aligned in two rows;
- at least two metal plates (110), forming busbars, each of the busbars comprising a portion (112) forming a connecting means for interlocking with that of the other portion of one of the lugs of a pair through complementing shapes, such that once the supports have been stacked and fixed, each busbar is connected with and electrically connects the lugs of the same row.

2. Battery module (M) according to Claim 1, the other portions (102) of each lug and the portion (112) of each busbar being configured as tenons and mortises, respectively, so as to form dovetail connections.

3. Battery module (M) according to Claim 2, the portions of each lug and of each busbar forming the dovetail connections having a T-shaped cross section.

4. Battery module (M) according to one of the preceding claims, the portions of each lug and of each busbar forming the connections for interlocking through complementing shapes being adjusted with respect to one another with a clamping clearance.

5. Battery module (M) according to one of the preceding claims, the lugs and the busbars being made of the same material, preferably selected from copper, aluminium and their alloys.

6. Battery module (M) according to one of the preceding claims, comprising means for fixing stacked supports to one another, mechanical locking of the fixing means being achieved by the insertion, in the stacking direction of the supports, of the two metal plates forming busbars.

7. Battery module (M) according to Claim 6, each support internally comprising, along one of its longitudinal edges (12, 14) and/or lateral edges (11, 13), as fixing means, connecting means for interlocking with at least one adjacent support through complementing shapes; the connecting means being arranged so as not to project outside the stack once the interlocking connections have been made.

8. Battery module (M) according to Claim 7, the module being configured such that the longitudinal edges (12, 14) of the module form a flat surface once the interlocking connections have been made.

9. Battery module (M) according to Claim 7 or 8, the connecting means (20, 21) for interlocking through complementing shapes comprising, for each support:
- a plurality of crenellation teeth spaced apart along at least one of the longitudinal edges of one of the main faces of the support;
- a plurality of crenellation slots spaced apart along at least one of the longitudinal edges of the other of the main faces of the support, so that longitudinal sliding of two adjacent supports relative to one another causes each crenellation tooth of a longitudinal edge to engage in a crenellation slot of a longitudinal edge, thereby defining a closed position of the two supports.

10. Battery module (M) according to Claim 9, the connecting means (23, 24) for interlocking through complementing shapes comprising, for each support:
- at least one crenellation tooth arranged on one of the lateral edges of one of the main faces of the support;
- at least one crenellation slot arranged on one of the lateral edges of the other of the main faces of the support, in such a way that, during longitudinal sliding of two adjacent supports relative to one another, the crenellation tooth of a support lateral edge engages in a lateral crenellation slot in the closed position of the two supports.

11. Battery module (M) according to either of Claims 9 and 10, the crenellation teeth and the crenellation slots being configured as tenons and as mortises, respectively, so as to form dovetail connections.

12. Battery module (M) according to Claim 11, the crenellation teeth and the crenellation slots having a T-shaped cross section.

13. Battery module (M) according to one of the preceding claims, each accumulator being a Li-ion accumulator in which:
- the material of the negative electrode(s) is selected from the group comprising graphite, lithium, the titanate oxide Li₄TiO₅O₁₂ and silicon;
- the material of the positive electrode(s) is selected from the group comprising LiFePO₄, LiCoO₂ and LiNi_{0.33}Mn_{0.33}Co_{0.33}O₂.

14. Battery pack comprising at least two battery modules (M) according to one of the preceding claims, connected electrically to one another by means of at least one busbar connected electrically to the metal plates of the modules, on the outside of the stack of modules.

15. Method for manufacturing a battery module (M) according to one of Claims 7 to 13, comprising the following steps:
i/ inserting each pair of lug-forming strips into the housings of each support so that it is held thereby;
ii/ housing each accumulator in one of the plurality of supports with the output terminals of each accumulator facing the pair of lugs;
iii/ stacking the adjacent supports by sliding along their longitudinal edges relative to one another until the interlocking connections through complementing shapes are made;
iv/ sliding each metal plate forming a busbar, transversely to the stack, along the lugs of the same row until an interlocking connection to one another through complementing shapes is made in order both to electrically connect the lugs of the same row to one another and to mechanically lock the relative sliding between the adjacent supports.
